(19) Europäisches Patentamt
European Patent Office
Office européen des brevets

(11) EP 4 764 022 A1

(12) EUROPEAN PATENT APPLICATION
published in accordance with Art. 153(4) EPC

(43) Date of publication:
24.06.2026 Bulletin 2026/26

(21) Application number: 24867819.5

(22) Date of filing: 15.05.2024

(51) International Patent Classification (IPC):
C23C 2/12 (2006.01)    B21D 22/20 (2006.01)
C22C 21/00 (2006.01)   C22C 21/02 (2006.01)
C22C 21/06 (2006.01)   C22C 30/00 (2006.01)
C23C 2/28 (2006.01)    C23C 2/40 (2006.01)
C21D 1/18 (2006.01)    C21D 9/00 (2006.01)
C22C 38/00 (2006.01)   C22C 38/06 (2006.01)
C22C 38/60 (2006.01)

(52) Cooperative Patent Classification (CPC):
B21D 22/20; C22C 21/00; C22C 21/02;
C22C 21/06; C22C 30/00; C23C 2/12; C23C 2/28;
C23C 2/40; C21D 1/18; C21D 9/00; C22C 38/00;
C22C 38/06; C22C 38/60

(86) International application number:
PCT/JP2024/017906

(87) International publication number:
WO 2025/062731 (27.03.2025 Gazette 2025/13)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 22.09.2023 JP 2023158239

(71) Applicant: JFE Steel Corporation
Tokyo, 100-0011 (JP)

(72) Inventors:
• NISHIIKE, Ryoto
Tokyo 100-0011 (JP)
• SATO, Rinta
Tokyo 100-0011 (JP)
• MAKIMIZU, Yoichi
Tokyo 100-0011 (JP)

(74) Representative: Hoffmann Eitle
Patent- und Rechtsanwälte PartmbB
Arabellastraße 30
81925 München (DE)

(54) HOT-PRESSED MEMBER AND STEEL SHEET FOR HOT PRESSING

(57) To provide a hot-pressed member that achieves both high strength and corrosion resistance at cut portions as well as hydrogen embrittlement resistance, and a steel sheet for hot pressing used to form such a hot-pressed member. The hot-pressed member includes a steel sheet, and a coating layer provided on at least one surface of the steel sheet, characterized in that the coating layer has a component composition including, in mass%, at least one of Mg: 0.1 to 5.0% and Ca: 0.005 to 1.0%, Si: 3.0 to 15.0%, and Fe: 55.0% or less, with the balance being Al and unavoidable impurities, and the coating layer satisfies $L_{tc}/L_w \leq 1$, where $L_{tc}$ is the total crack length index of cracks observed within the range of the length $L_w$ of the coating layer, as measured in a direction parallel to the surface of the steel sheet, in a cross-section of the coating layer perpendicular to the surface of the steel sheet.

[Fig. 1]

**Description**

Technical Field

The present invention relates to a hot-pressed member and a steel sheet for hot pressing used to produce such a hot-pressed member. In particular, the present invention relates to a hot-pressed member and a steel sheet for hot pressing that each have high strength as well as excellent corrosion resistance at cut portions and excellent hydrogen embrittlement resistance.

Background Art

To achieve automotive lightweighting and improved collision safety, efforts to increase the strength of automotive steel sheets have been made. In recent years, cold-rolled steel sheets with a 1.5 GPa-grade tensile strength have been developed, and their application has been studied. However, such cold-rolled steel sheets have challenges, such as forming defects during pressing due to their high strength and reduced dimensional accuracy caused by springback.

Thus, the production of members using a hot-pressing technology, which includes subjecting a steel sheet to hot pressing rather than cold pressing, has been studied. Hot pressing is a forming method that includes heating a steel sheet to the temperature range for austenite formation, pressing the steel sheet at the high temperature into a given shape, and quenching the steel sheet at the same time due to contact with dies. Hot pressing involves heating a steel sheet to improve its formability, and then pressing the steel sheet into a given shape, followed by quenching, and thus can achieve high strength. This allows for the production of a hot-pressed member with excellent strength and high dimensional accuracy.

Hot-pressed members are used mainly for automotive members, in particular, structural members of vehicle frames requiring high strength, that is, inner panel frames. In recent years, hot-pressed members have also been used for so-called semi-outer panel members, such as members around pillars that are visible when automotive doors are opened. Therefore, hot-pressed members are required to be suitable for painting and are also required to have excellent corrosion resistance at cut portions after painting.

While hot-pressed members with a 1.5 GPa-grade tensile strength after hot pressing have been the mainstream, there is an increasing demand for higher-strength members with a 1.8 GPa-grade tensile strength or greater to further reduce the automotive body weight.

However, high-strength hot-pressed members are known to be highly susceptible to hydrogen embrittlement, becoming brittle when hydrogen enters the member. Thus, it is necessary to take advanced measures against hydrogen embrittlement to achieve high strength of hot-pressed members. Examples of hydrogen that enter a hot-pressed member during its production process include hydrogen introduced during the production of a steel sheet for hot pressing, during a hot-pressing step, and during a painting step.

In particular, as a steel sheet for hot pressing suitable for the production of a hot-pressed member, a steel sheet has been proposed in which the surface of a steel base metal is coated with a coating of an Al-based plating layer. However, a hot-pressed member formed using such a steel sheet with Al-based plating has a significant amount of hydrogen introduced during the hot-pressing step. Thus, it is important to reduce the amount of hydrogen introduced during the step.

In this regard, Patent Literature 1 proposes setting the content of alkaline-earth metal or transition metal to 0.1 to 0.5 mass% and forming an oxide of the alkaline-earth metal or the transition metal on the outer surface of an Al-based plating layer during hot pressing. According to this method, the Al-based plating layer is covered with an oxide film of an element with high oxygen affinity, such as Mg. This suppresses reactions between the Al-based plating layer and water during the hot-pressing step, and thus can reduce hydrogen ingress.

Citation List

Patent Literature

Patent Literature 1: Japanese Translation of PCT International Application Publication No. 2017-536472

Summary of Invention

Technical Problem

When a steel sheet with Al-based plating is hot-pressed to form a hot-pressed member, an Fe-Al alloy layer is formed as a coating layer of the hot-pressed member. Since the Fe-Al alloy layer is very hard and brittle, numerous cracks may form, exposing the base metal. These cracks may serve as corrosion initiation points, potentially degrading corrosion resistance.

Patent Literature 1 above also presents a problem in that numerous cracks, which expose the base metal, form in the coating layer of the hot-pressed member, and these crack portions serve as corrosion initiation points, degrading the corrosion resistance at cut portions. Further, as an oxide of the alkaline-earth metal or the transition metal is formed on the outermost surface layer of the coating layer during a heating step prior to hot pressing, the barrier effect against water is insufficient at a cross-section of the coating layer exposed at each crack portion, which is problematic.

Accordingly, it is considered important to minimize cracking in the coating layer of the hot-pressed member to suppress the degradation of the corrosion resistance of the hot-pressed member and reduce hydrogen ingress.

An object of the present invention, which has been made in view of the foregoing circumstances, is to provide a hot-pressed member that achieves increased strength, corrosion resistance at cut portions, and hydrogen embrittlement resistance, and a steel sheet for hot pressing used to produce such a hot-pressed member.

Solution to Problem

As a result of studies conducted to solve the foregoing problems, the present invention has been achieved with the following configuration.

That is, the present invention provides a hot-pressed member including a steel sheet and a coating layer provided on at least one surface of the steel sheet, characterized in that the coating layer has a component composition including, in mass%, at least one of Mg: 0.1 to 5.0% and Ca: 0.005 to 1.0%, Si: 3.0 to 15.0%, and Fe: 55.0% or less, with the balance being Al and unavoidable impurities, and the coating layer satisfies $L_{tc}/L_w \leq 1$, where $L_{tc}$ is a total crack length index of cracks observed within a range of a length $L_w$ of the coating layer, as measured in a direction parallel to the surface of the steel sheet, in a cross-section of the coating layer taken perpendicular to the surface of the steel sheet.

In addition, the present invention provides a steel sheet for hot pressing, including a steel sheet and a plating layer provided on at least one surface of the steel sheet, characterized in that the plating layer includes an interfacial alloy layer provided on the steel sheet, and a metal layer provided on the interfacial alloy layer, the metal layer has a component composition including, in mass%, at least one of Mg: 0.2 to 7.0% and Ca: 0.01 to 1.5%, Si: 1.0 to 10.0%, and Fe: 10% or less, with the balance being Al and unavoidable impurities, and an area ratio of crystal grains that satisfy $L_c \geq L_h$ in the metal layer is 50% or more in a cross-section of the metal layer perpendicular to the surface of the steel sheet, where $L_c$ is a maximum length of each crystal grain in the metal layer as measured in a direction parallel to the surface of the steel sheet, and $L_h$ is a thickness of the metal layer.

Advantageous Effects of Invention

The present invention can provide a hot-pressed member that achieves increased strength, corrosion resistance at cut portions, and hydrogen embrittlement resistance, as well as a steel sheet for hot pressing that has an Al-based plating layer.

Brief Description of Drawings

[Fig. 1] is a view schematically illustrating a cross-section of a hot-pressed member of the present invention perpendicular to the surface of a steel sheet.

[Fig. 2] is a view schematically illustrating a cross-section of a steel sheet for hot pressing of the present invention, taken perpendicular to the steel sheet.

[Fig. 3] is a graph of the relationship between the cooling time and the steel sheet temperature during the production of the steel sheet for hot pressing of the present invention.

Description of Embodiments

(1) Hot-pressed member

An embodiment of the present invention will be described. It should be noted that the following describes a preferred embodiment, and a hot-pressed member of the present invention is not limited thereto. In addition, the unit "%" of content represents "mass%" unless otherwise specified.

A hot-pressed member according to an embodiment of the present invention includes a steel sheet and a coating layer provided on at least one surface of the steel sheet. Each component will be described below.

[Steel sheet]

The present embodiment solves the foregoing problems by controlling the structure of the coating layer as described below. Accordingly, the steel sheet is not limited to a particular type, and any steel material may be used. In addition, the steel sheet may be either a cold-rolled steel sheet or a hot-rolled steel sheet.

It should be noted that the hot-pressed member of the present embodiment is produced by hot-pressing a steel sheet for hot pressing described below.

The hot-pressed member preferably has high strength from the perspective of its use as an automotive member, for example. In particular, to obtain a hot-pressed member with a tensile strength of over 1.8 GPa, it is preferable to use a steel sheet with the following component composition. That is, a component composition including C: 0.05 to 0.50%, Si: 0.1 to 1.5%, Mn: 0.5 to 5.0%, P: 0.1% or less, S: 0.01% or less, Al: 0.10% or less, and N: 0.01% or less, with the balance being Fe and unavoidable impurities, is preferable.

Regarding the preferred component composition of the steel sheet described above, the operational effects and preferred content of each element will be described below.

C: 0.05 to 0.50%

C is an element that enhances strength by forming a structure such as martensite. From the perspective of achieving a strength of over 1.8 GPa-grade, the C content is preferably set to 0.05% or more, and more preferably 0.10% or more. Meanwhile, if the C content exceeds 0.50%, the toughness of the spot-welded portion may deteriorate. Therefore, the C content is preferably set to 0.50% or less, more preferably 0.45% or less, further preferably 0.43% or less, and most preferably 0.40% or less.

Si: 0.1 to 1.5%

Si is an element effective for increasing the strength of steel and achieving good material quality. To achieve these effects, the Si content is preferably set to 0.1% or more, and more preferably 0.2% or more. Meanwhile, if the Si content exceeds 1.5%, ferrite tends to be stabilized, which reduces hardenability. Therefore, the Si content is preferably set to 1.5% or less, more preferably 1.3% or less, and further preferably 1.1% or less.

Mn: 0.5 to 5.0%

Mn is an element effective for obtaining high strength regardless of the cooling rate. From the perspective of ensuring excellent mechanical properties and strength, the Mn content is preferably set to 0.5% or more, more preferably 0.7% or more, and further preferably, 1.0% or more. Meanwhile, if the Mn content exceeds 5.0%, costs increase, and the effect of adding Mn becomes saturated. Thus, the Mn content is preferably set to 5.0% or less, more preferably 4.5% or less, and further preferably 4.0% or less.

P: 0.1% or less

If the P content is excessive, local ductility decreases due to grain boundary embrittlement caused by the segregation of P at austenite grain boundaries during casting. Consequently, the balance between the strength and ductility of the steel sheet is disrupted. Thus, from the perspective of improving the balance between the strength and ductility of the steel sheet, the P content is preferably set to 0.1% or less. Meanwhile, from a refining cost perspective, the P content is preferably set to 0.01% or more.

S: 0.01% or less

S forms inclusions such as MnS, which deteriorate impact resistance and cause cracking along the metal flow of the weld. Therefore, the S content is desirably minimized. Specifically, the S content is preferably set to 0.01% or less. In addition, from the perspective of ensuring good stretch-flanging properties, the S content is more preferably set to 0.005% or less, and further preferably 0.001% or less. Meanwhile, from the perspective of refining cost, the S content is preferably set to 0.0002% or more.

Al: 0.10% or less

Al is an element that serves as a deoxidizing agent. However, if the Al content exceeds 0.10%, the blanking formability and hardenability of the steel sheet decrease. Therefore, the Al content is preferably set to 0.10% or less, more preferably 0.07% or less, and further preferably 0.04% or less. Meanwhile, from the perspective of ensuring the effect of Al as a deoxidizing agent, the Al content is preferably set to 0.01% or more.

N: 0.01% or less

If the N content exceeds 0.01%, AlN nitrides are formed during hot rolling or during heating prior to hot pressing, which deteriorates the blanking formability and hardenability of the steel sheet. Therefore, the N content is preferably set to 0.01% or less. Meanwhile, from the perspective of refining cost, the N content is preferably set to 0.001% or more.

The component composition described above may optionally further include at least one element selected from the group consisting of Nb: 0.10% or less, Ti: 0.05% or less, B: 0.0002 to 0.005%, Cr: 0.1 to 1.0%, and Sb: 0.003 to 0.03%.

Nb: 0.10% or less

Nb is a component effective for increasing the strength of steel, but an excessive Nb content 1 increases in rolling load. Thus, if Nb is added, the Nb content is preferably set to 0.10% or less, and more preferably 0.05% or less. Meanwhile, the lower limit of the Nb content is not limited to a particular value, and may be 0%. However, if Nb is utilized to increase the strength of steel, the Nb content is preferably set to 0.005% or more.

Ti: 0.05% or less

Ti is a component effective for increasing the strength of steel, similarly to Nb, but an excessive Ti content reduces shape retention. Therefore, when Ti is added, its content is preferably set to 0.05% or less, and more preferably 0.03% or less. Meanwhile, the lower limit of the Ti content is not limited to a particular value and may be 0%. However, when Ti is used to enhance the strength of steel, the Ti content is preferably set to 0.005% or more.

B: 0.0002 to 0.005%

B has the effect of suppressing the formation and growth of ferrite from austenite grain boundaries. Therefore, when B is added, the B content is preferably set to 0.0002% or more, and more preferably 0.0010% or more. However, excessive addition of B deteriorates formability. Accordingly, the B content is preferably set to 0.005% or less, and more preferably 0.003% or less.

Cr: 0.1 to 1.0%

Cr is an element useful for increasing the strength of steel and improving its hardenability, similarly to Mn. Thus, when Cr is added, the Cr content is preferably set to 0.1% or more, and more preferably 0.2% or more to achieve these effects. Meanwhile, since Cr is an expensive element, an excessive addition of Cr significantly increases costs. Therefore, the Cr content is preferably set to 1.0% or less, and more preferably 0.6% or less.

Sb: 0.003 to 0.03%

Sb suppresses the decarburization of the surface layer of the steel sheet during an annealing step in the production of the steel sheet as the base metal. When Sb is added, the Sb content is preferably set to 0.003% or more, and more preferably 0.005% or more to achieve this effect. Meanwhile, an Sb content exceeding 0.03% increases the rolling load, resulting in reduced productivity. Therefore, the Sb content is preferably set to 0.03% or less, more preferably 0.02% or less, and further preferably 0.01% or less.

[Coating layer]

The hot-pressed member of the present embodiment includes a coating layer on at least one surface of the steel sheet. The coating layer may be provided on only one surface of the steel sheet, but is more preferably provided on both surfaces thereof.

The coating layer includes: an Fe-Al alloy phase as a main layer; at least one of Mg and Ca; and Si. Such a coating layer is formed by hot-pressing a steel sheet for hot pressing that has an Al-based plating layer, as described below. During the hot-pressing step, at least one of Mg and Ca contained in the coating layer is oxidized in the surface layer of the coating, and the coating layer is covered with an oxide film of the oxidized Mg and/or Ca. This oxide film can suppress hydrogen ingress through the surface layer of the coating layer. The operational effects and preferred content of each element contained in the preferred component composition of the coating layer will be described below.

Mg: 0.1 to 5.0%

If the Mg content in the coating layer is less than 0.1%, the coating layer cannot be sufficiently covered with an oxide film of Mg, making it difficult to achieve a sufficient effect of suppressing hydrogen ingress during the hot-pressing step. Therefore, the Mg content is set to 0.1% or more. If the Mg content exceeds 5.0%, Mg oxide in the form of lumps is formed on the outermost surface layer of the coating layer. The Mg oxide in the form of lumps is likely to react with water during the hot-pressing step, making it difficult to achieve the desired effect of suppressing hydrogen ingress. Accordingly, the Mg content is set to 5.0% or less.

Ca: 0.005 to 1.0%

Similarly to Mg, Ca forms an oxide film on the surface of the coating layer and thus suppresses hydrogen ingress. Therefore, in the present invention, the Ca content in the coating layer is set to 0.005% or more, with which the desired effect of suppressing hydrogen ingress can be achieved. Meanwhile, a Ca content exceeding 1.0% promotes reactions between Ca oxide in the form of lumps and water during the hot-pressing step, similarly to the case of Mg, making it difficult to achieve the desired effect of suppressing hydrogen ingress. Therefore, the Ca content is set to 1.0% or less.

Si: 3.0 to 15.0%

Si has the effect of suppressing alloying of the plating layer during a plating step, and a heat treatment step performed prior to hot pressing. If the Si content in the plating layer is less than 3.0%, excessive diffusion of Fe into the coating layer occurs during the heating step of hot pressing, causing the coating layer to become brittle and prone to cracking. This results in degraded corrosion resistance at cut portions and hydrogen embrittlement resistance. Accordingly, the Si content is set to 3.0% or more. Meanwhile, an excessive Si content increases the amount of Si-based oxide generated, which deteriorates the adhesion of the coating film and, consequently, corrosion resistance. Therefore, the Si content is set to 15.0% or less.

Fe: 55.0% or less

Fe diffuses from the steel sheet into the plating layer during a hot-dip coating process for the steel sheet and during heating performed prior to hot pressing. Thus, the coating layer of the hot-pressed member unavoidably contains Fe. However, an increase in the Fe content reduces the Al concentration in the coating layer, causing the coating layer to become brittle and prone to cracking. This results in degraded corrosion resistance at cut portions and degraded hydrogen embrittlement resistance. Therefore, the Fe content is set to 55.0% or less. Meanwhile, the lower limit of the Fe content is not limited to a particular value, but the Fe content may be 20.0% or more if production is performed under typical conditions.

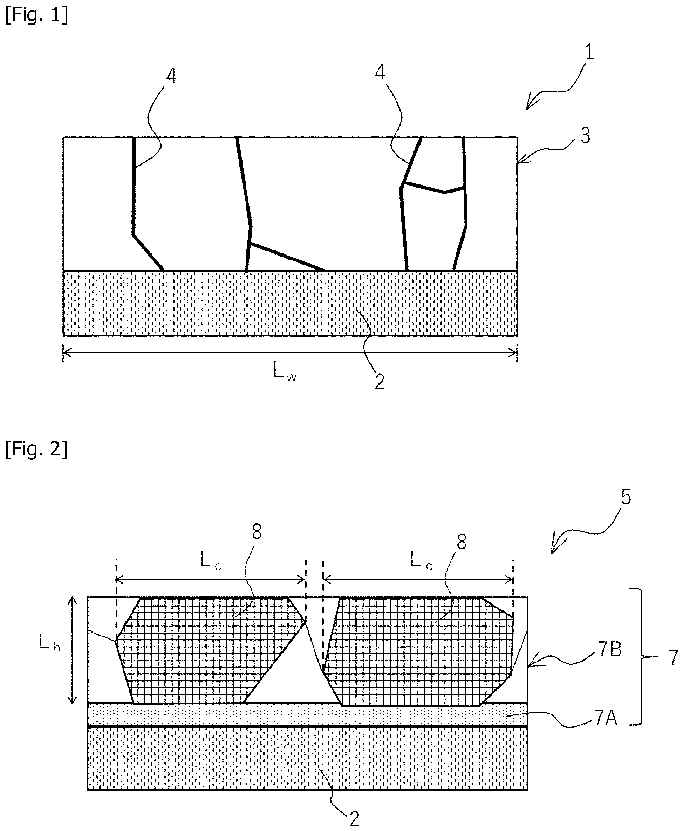

Next, cracks that occur in the coating layer will be described with reference to the drawing. Fig. 1 is a schematic cross-sectional view of a hot-pressed member 1 according to the present embodiment, taken perpendicular to the surface of a steel sheet 2. The hot-pressed member 1 in Fig. 1 includes the steel sheet 2 and a coating layer 3 provided on one surface of the steel sheet 2. A plurality of cracks 4 are observed in the coating layer 3. It should be noted that the coating layer 3 may be provided on both surfaces of the steel sheet 2.

In the present embodiment, referring to Fig. 1, provided that the length of the coating layer 3 in a direction parallel to the surface of the steel sheet 2 is denoted by $L_w$ (hereinafter referred to as "parallel length $L_w$"), and the total crack length index of cracks observed within the range of the parallel length $L_w$ is denoted by $L_{tc}$, it is necessary that the condition "$L_{tc}/L_w \leq 1$" be satisfied.

This is because if the condition "$L_{tc}/L_w > 1$" is satisfied, the steel sheet 2 as the base metal is not covered with the coating layer 3 and becomes partially exposed, or cross-sections of the coating layer 3 not covered with the oxide film at portions of the cracks 4 become exposed. This makes it difficult to obtain the desired corrosion resistance at cut portions and the desired hydrogen embrittlement resistance.

The ratio $L_{tc}/L_w$ of the total crack length index $L_{tc}$ to the parallel length $L_w$ of the coating layer 3 can be determined by observing a cross-section of the hot-pressed member 1 perpendicular to the surface of the steel sheet 2 using a scanning electron microscope (SEM), and then analyzing the obtained image. Specifically, a cross-section of the coating layer 3 is observed for ten randomly selected fields of view. Then, for each field of view, the total crack length index $L_{tc}$, which is the total length of the cracks 4 that have occurred in the cross-section of the coating layer 3, and the parallel length $L_w$ are determined, and $L_{tc}/L_w$ is calculated. The mean value of $L_{tc}/L_w$ calculated for the ten fields of view is determined as the value of $L_{tc}/L_w$ of the hot-pressed member. Note that observation of the cross-section of the coating layer 3 is performed to allow the parallel length $L_w$ to be 500 $\mu$m or more.

The coating weight of the coating layer 3 is not limited to a particular value. However, from the perspective of corrosion resistance, the coating weight on each side of the steel sheet 2 is preferably set to 60 g/m$^2$ or more. Meanwhile, from the perspective of the production cost, the coating weight on each side of the steel sheet 2 is preferably set to 400 g/m$^2$ or less. The coating weight of the coating layer 3 can be determined by dissolving and removing the coating layer 3 from the surface of the hot-pressed member 1 using an acid solution and subtracting the weight of the hot-pressed member 1 after removal of the coating layer 3 from the weight of the hot-pressed member 1 before removal. An inhibitor for suppressing the dissolution of the steel sheet 2 is added to the acid solution.

(2) Steel sheet for hot pressing

Next, the steel sheet for hot pressing of the present invention will be described. A preferred embodiment will be described below, and the steel sheet for hot pressing of the present invention is not limited thereto. In addition, the unit "%" of content represents "mass%" unless otherwise specified.
Note that the hot-pressed member described in (1) above can be produced by hot-pressing the steel sheet for hot pressing of the present embodiment that has a plating layer.
The steel sheet for hot pressing of the present embodiment includes a steel sheet, and a plating layer provided on at least one surface of the steel sheet.

[Steel sheet]

The steel sheet is not limited to a particular steel sheet, and any steel material may be used therefor. The steel sheet may be either a cold-rolled steel sheet or a hot-rolled steel sheet. The composition of the steel sheet is not limited to a particular composition, either, but it is preferable to use a steel material having the component composition of the hot-pressed member described in (1) above.

[Plating layer]

The steel sheet for hot pressing according to the present embodiment includes a plating layer on at least one surface thereof. The plating layer includes an interfacial alloy layer provided on the steel sheet, and a metal layer provided on the interfacial alloy layer. The plating layer may be provided on only one surface of the steel sheet, but is more preferably provided on both surfaces of the steel sheet.

[Interfacial alloy layer]

The steel sheet for hot pressing is typically produced by applying a hot-dip coating to the steel sheet as described below. During the process, components, such as Fe and Mn, contained in the steel sheet react with components, such as Al and Si, contained in a plating bath, thereby forming an interfacial alloy layer at the interface between the steel sheet and the metal layer. In the present embodiment, the composition of the interfacial alloy layer is not limited to a particular composition.

[Metal layer]

For the coating layer of the hot-pressed member, which is formed by hot-pressing the steel sheet for hot pressing of the present embodiment, to have a composition that satisfies the foregoing conditions, the metal layer of the steel sheet for hot pressing needs to have the following component composition. Specifically, the metal layer needs to contain at least one of Mg: 0.2 to 7.0% and Ca: 0.01 to 1.5%, Si: 1.0 to 10.0%, and Fe: 10% or less, with the balance being Al and unavoidable impurities.
Further, with respect to the final hot-pressed member obtained, in order for the total crack length index $L_{tc}$ of the coating layer 3 in a cross-section perpendicular to the surface of the steel sheet 2, as illustrated in Fig. 1, to be less than or equal to the parallel length $L_w$, that is, to satisfy the condition of $L_{tc}/L_w \leq 1$, the following conditions need to be satisfied. That is, as seen in a cross-sectional view of a steel sheet 5 for hot pressing, schematically illustrated in Fig. 2, the following conditions need to be satisfied.

(a) The steel sheet 5 for hot pressing includes the steel sheet 2 as the base metal, and a plating layer 7 provided on at least one surface of the steel sheet 2. The plating layer 7 includes an interfacial alloy layer 7A provided on the steel sheet 2, and a metal layer 7B provided on the interfacial alloy layer 7A.
(b) In the metal layer 7B of the steel sheet 5 for hot pressing, the area ratio of crystal grains 8 that satisfy the condition "$L_c \geq L_h$" is 50% or more in a cross-section of the metal layer 7B taken perpendicular to the surface of the steel sheet 2, where $L_c$ refers to the maximum length of each crystal grain 8 in the metal layer 7B as measured in a direction parallel to the surface of the steel sheet 2, and $L_h$ refers to the thickness of the metal layer 7B.

This is because the number of the cracks 4 that occur in the coating layer 3 of the hot-pressed member 1 tends to decrease as the crystal grains 8 in the metal layer 7B of the steel sheet 5 for hot pressing become larger.

The area ratio of the crystal grains 8 that satisfy the condition "$L_c \geq L_h$" in the metal layer 7B can be determined by observing a cross-section of the steel sheet 5 for hot pressing taken perpendicular to the surface of the steel sheet 2 using a scanning electron microscope (SEM), and then analyzing the obtained image using electron backscatter diffraction (EBSD). Specifically, a cross-section of the plating layer 7 is observed in three randomly selected fields of view. For each field of view, the area ratio of the crystal grains 8 that satisfy the condition "$L_c \geq L_h$", in the metal layer 7B is calculated, where $L_c$ refers to the maximum length of each crystal grain 8 in the metal layer 7B as measured in a direction parallel to the surface of the steel sheet 2, and $L_h$ refers to the thickness of the metal layer 7B. The mean value of the area ratios calculated for the three fields of view is determined as the value of the area ratio of the crystal grains 8 that satisfy the condition "$L_c \geq L_h$", in the steel sheet for hot pressing. It should be noted that observation of the cross-section of the plating layer 7 is performed to allow the length of each crystal grain, as measured in the direction parallel to the surface of the steel sheet 2, to be 200 $\mu$m or more.

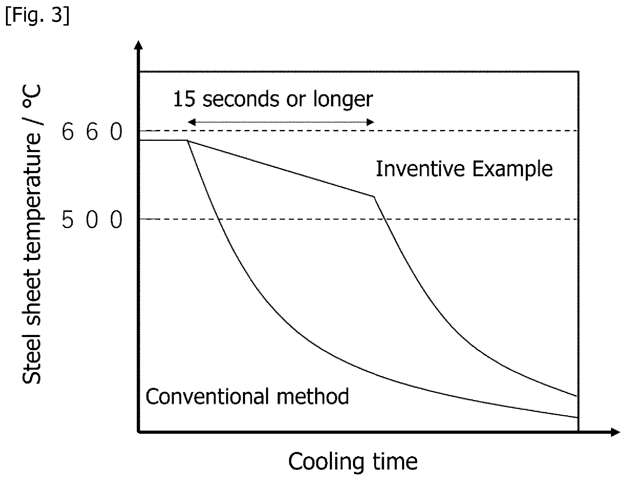

In order for the crystal grains 8 contained in the metal layer 7B of the steel sheet 5 for hot pressing to satisfy the above-described conditions, it is necessary to perform cooling under specific conditions during the production of the steel sheet 5 for hot pressing. Specifically, as illustrated in Fig. 3, after the steel sheet 2 is taken out of a molten metal bath, a cooling-hold step is implemented in which the steel sheet 2 is maintained within the temperature range of 660°C to 500°C. This cooling-hold step allows the crystal grains 8 in the metal layer 7B to coarsen during the solidification process. As a result, a crystal grain distribution that satisfies the above conditions can be achieved. Further, this can reduce the formation of the cracks 4 in the coating layer 3 of the hot-pressed member 1. It should be noted that the cooling-hold time is set to 15 seconds or longer. This is because if the cooling-hold time is shorter than 15 seconds, the crystal grains 8 do not become coarse sufficiently, and consequently, the occurrence of the cracks 4 in the coating layer 3 of the hot-pressed member 1 cannot be reduced. In addition, if the cooling-hold temperature falls below 500°C, the coarsening of the crystal grains 8 becomes insufficient, requiring a longer hold time and leading to problems in production efficiency and costs.

(3) Method for producing hot-pressed member

Next, a preferred method for producing the hot-pressed member of the present invention will be described.

The hot-pressed member of the present invention can be produced by hot-pressing a steel sheet for hot pressing that satisfies the foregoing conditions. It is particularly important that the steel sheet for hot pressing used herein be a steel sheet that has undergone cooling (a cooling-hold step) under specific conditions after plating, so as to have coarsened crystal grains in the metal layer as described above.

The method for hot-pressing the steel sheet for hot pressing is not limited to a particular method, and can be performed in accordance with the standard procedure. A typical method includes a heat treatment step of heating the steel sheet for hot pressing to a predetermined heating temperature, and a hot-pressing step of hot-pressing the steel sheet for hot pressing. Preferred hot-pressing conditions will be described below.

[Heat treatment step]

In the heat treatment step, the steel sheet for hot pressing is heated to a heating temperature within the range from the $Ac_3$ transformation point (°C) to 980°C. That is, the steel sheet is heated into a so-called austenite region. The heat treatment step facilitates alloying of the plating layer (an Fe-Al alloy phase). By setting the heating temperature to the $Ac_3$ transformation point (°C) or more, the microstructure of the steel sheet for hot pressing as the base metal of the steel sheet can be austenitized. The austenite transforms into a hard phase, such as a martensite phase, by quenching during the following hot pressing. As a result, the resulting hot-pressed member exhibits high strength. If the heating temperature is below the $Ac_3$ transformation point (°C), the austenite fraction in the heated steel sheet decreases. Therefore, the volume fraction of martensite after hot pressing becomes insufficient, making it difficult to ensure adequate tensile strength. Meanwhile, if the heating temperature exceeds 980°C, the Fe concentration in the plating layer (the Fe-Al alloy phase) becomes excessive, making it difficult to achieve the desired corrosion resistance. Furthermore, if the heating temperature exceeds 980°C, the occurrence of cracks in the coating layer of the hot-pressed member becomes significant, making it difficult to ensure the desired hydrogen embrittlement resistance. Therefore, a hot-pressed member that satisfies the conditions of the present invention cannot be obtained.

Note that the $Ac_3$ transformation point (°C) can be determined from Expression (I) below.

The $Ac_3$ transformation point (°C) = 881-206C+53Si-15Mn-20Ni-1Cr-27Cu+41Mo    (I)

Herein, the chemical symbol in Expression (I) represents the content of each element expressed in mass%. The content of elements not contained in the steel sheet is calculated as 0.

In the heat treatment step, the steel sheet is heated to the above-described heating temperature and is then maintained at the heating temperature for 5 minutes or less. Providing such a holding time ensures reliable austenitic transformation of the steel sheet, thereby achieving high strength. Further, providing such a holding time ensures reliable alloying of the coating layer. It should be noted that if the coating layer is not sufficiently alloyed, a pure Al phase may remain in the coating layer, which may lead to concerns about its adhesion to the press die. Meanwhile, if the holding time is too long, the alloying of the plating layer progresses excessively, resulting in an excessive Fe content in the coating layer. This makes it difficult to achieve the desired corrosion resistance. Further, hydrogen ingress into the steel sheet may progress during heating, making it difficult to ensure the desired hydrogen embrittlement resistance. Thus, the holding time of the heat treatment step is set to 5 minutes or less.

The method for heating the steel sheet for hot pressing during the heat treatment step is not limited to a particular method, and any method may be used. For example, heating may be performed using a heating furnace, electric heating, induction heating, high-frequency heating, or flame heating. It should be noted that any type of heating furnace, such as an electric furnace or a gas furnace, may be used as the heating furnace.

[Hot-pressing step]

After the heat treatment step, a hot-pressing step is performed in which the steel sheet for hot pressing is hot-pressed to form a hot-pressed member. During the hot-pressing step, cooling is performed concurrently with or immediately after forming, using dies or coolant such as water. In the present embodiment, the hot-pressing conditions are not limited to particular conditions. For example, pressing may be performed in a typical hot-pressing temperature range of 600 to 800°C.

Examples

To confirm the advantageous effects of the present invention, a steel sheet for hot pressing was prepared, and a hot-pressed member was fabricated using the steel sheet for hot pressing. Then, their characteristics were evaluated.

[Example 1]

<Steel sheet for hot pressing>

A plating layer was formed on the surface of a steel sheet as the base metal through the following procedure to obtain a steel sheet for hot pressing. Specifically, a plating layer was formed on both surfaces of a steel sheet having a thickness of 1.4 mm, using a continuous hot-dip coating line. As the steel sheet, a cold-rolled steel sheet with a composition component including C: 0.34%, Si: 0.25%, Mn: 1.20%, P: 0.005%, S: 0.001%, Al: 0.03%, N: 0.004%, Ti: 0.02%, B: 0.002%, Cr: 0.18%, and Sb: 0.008%, with the balance being Fe and unavoidable impurities was used. The $Ac_3$ transformation point of the cold-rolled steel sheet is 783°C. The temperature of the plating bath was set to 640°C, and the coating weight of the plating layer was set to 60 $g/m^2$ on each side of the steel sheet, that is, 120 $g/m^2$ in total for both sides.

To form the plating layer, a cooling-hold step was provided under the conditions shown in Table 1 to perform cooling. It should be noted that cooling of the steel sheet after its removal from the molten metal bath was performed using a nitrogen gas.

(Component composition of metal layer)

The component composition of the obtained metal layer was measured by area analysis using an SEM (scanning electron microscope) - EDX (energy dispersive X-ray analysis). The SEM-EDX analysis was performed at an acceleration voltage of 15.0 kV, using a SEM (JSM-7200F) manufactured by JEOL Ltd. and an EDX detector (UltraDry) manufactured by Thermo Fisher Scientific K.K. The obtained results are shown in Table 1.

(Crystal grains of metal layer)

Next, the crystal grain distribution of the metal layer was measured using the EBSD method with an SEM. Analysis was conducted at an acceleration voltage of 15.0 kV using a SEM (JSM-7200F) manufactured by JEOL Ltd., and an EBSD detector (Digiview iv) manufactured by TexSEM Laboratories, Inc. Specifically, a cross-section of the steel sheet for hot pressing was observed at 500× magnification using the SEM, and analysis was performed for three randomly selected fields of view using the EBSD method to measure the crystal grain distribution. Further, from the crystal grain distribution, the area ratio of crystal grains each having a maximum length $L_c$, as measured in a direction parallel to the surface of the steel sheet, of greater than or equal to the thickness $L_h$ of the metal layer in the cross-section of the metal layer was measured. Then, the mean value of the area ratios measured for the three fields of view was determined as the area ratio of crystal grains, which satisfy the condition "$L_c \geq L_h$", in the steel sheet under test. The results of the obtained area ratio were evaluated based on the following criteria. Table 1 presents the evaluation results.

Good: The area ratio is 50% or more
Poor: The area ratio is less than 50%

[Table 1]

| No. | Cooling-hold time (sec) | Steel sheet for hot pressing | | | | | | | | Remarks |
| | | Component composition (mass%) of metal layer | | | | | Crystal grains of metal layer | | |
| | | Al | Mg | Ca | Si | Fe | Area ratio (%) | Determination | |
| 1 | 20 | 90.7 | 1.2 | 0 | 3.1 | 5.0 | 65 | Good | Example |
| 2 | 15 | 90.9 | 1.3 | 0 | 3.0 | 4.8 | 54 | Good | Example |
| 3 | 10 | 90.7 | 1.2 | 0 | 3.0 | 5.1 | 44 | Poor | Comparative Example |
| 4 | 25 | 90.9 | 1.2 | 0 | 3.1 | 4.8 | 76 | Good | Example |
| 5 | 20 | 92.4 | 0.1 | 0 | 3.1 | 4.4 | 61 | Good | Comparative Example |
| 6 | 20 | 91.4 | 0.2 | 0 | 3.1 | 5.3 | 69 | Good | Example |
| 7 | 20 | 90.9 | 0.6 | 0 | 3.2 | 5.3 | 64 | Good | Example |
| 8 | 20 | 88.1 | 3.8 | 0 | 3.1 | 5.0 | 58 | Good | Example |
| 9 | 20 | 86.3 | 5.8 | 0 | 3.2 | 4.7 | 71 | Good | Example |
| 10 | 20 | 85.0 | 7.1 | 0 | 3.1 | 4.8 | 68 | Good | Comparative Example |
| 11 | 20 | 92.4 | 0 | 0 | 3.0 | 4.6 | 63 | Good | Comparative Example |
| 12 | 20 | 92.0 | 0 | 0.01 | 3.1 | 4.9 | 64 | Good | Example |
| 13 | 20 | 91.6 | 0 | 0.12 | 3.0 | 5.3 | 69 | Good | Example |
| 14 | 20 | 90.8 | 0 | 0.99 | 3.0 | 5.2 | 71 | Good | Example |
| 15 | 20 | 90.4 | 0 | 1.52 | 3.0 | 5.1 | 72 | Good | Comparative Example |
| 16 | 20 | 90.5 | 1.3 | 0.04 | 3.0 | 5.1 | 68 | Good | Example |
| 17 | 20 | 92.8 | 1.4 | 0 | 0.3 | 5.4 | 63 | Good | Comparative Example |
| 18 | 20 | 92.6 | 1.2 | 0 | 1.0 | 5.2 | 69 | Good | Example |
| 19 | 20 | 90.4 | 1.2 | 0 | 3.5 | 5.0 | 64 | Good | Example |
| 20 | 20 | 87.0 | 1.3 | 0 | 6.9 | 4.8 | 61 | Good | Example |
| 21 | 20 | 84.1 | 1.2 | 0 | 10.3 | 4.4 | 63 | Good | Comparative Example |
| 22 | 20 | 83.4 | 1.2 | 0 | 3.7 | 11.7 | 69 | Good | Comparative Example |
| 23 | 20 | 90.6 | 1.2 | 0 | 3.0 | 5.2 | 67 | Good | Example |
| 24 | 20 | 90.8 | 1.3 | 0 | 3.0 | 4.9 | 71 | Good | Example |
| 25 | 20 | 90.8 | 1.3 | 0 | 3.0 | 4.9 | 63 | Good | Example |
| 26 | 20 | 90.7 | 1.2 | 0 | 2.9 | 5.2 | 66 | Good | Example |
| 27 | 20 | 91.0 | 1.1 | 0 | 3.1 | 4.8 | 66 | Good | Example |

(continued)

| No. | Cooling-hold time (sec) | Steel sheet for hot pressing | | | | | | | | Remarks |
|---|---|---|---|---|---|---|---|---|---|---|
| | | Component composition (mass%) of metal layer | | | | | Crystal grains of metal layer | | | |
| | | Al | Mg | Ca | Si | Fe | Area ratio (%) | Determination | | |
| 28 | 20 | 90.4 | 1.3 | 0 | 3.2 | 5.1 | 61 | Good | | Example |

[Example 2]

<Hot-pressed member>

Next, each steel sheet for hot pressing obtained in Example 1 was hot-pressed under the conditions shown in Table 2 to form a hot-pressed member. Specifically, each steel sheet for hot pressing was first cut into a size of 70 mm × 150 mm and subjected to heat treatment in an electric furnace. The heating temperature and the holding time at the heating temperature during the heat treatment were set as shown in Table 2. The heat treatment was performed in an atmosphere having a dew point of 10°C. The steel sheet for hot pressing was then taken out of the electric furnace and hot-pressed using flat dies. The forming start temperature was set to 700°C.

(Component composition of coating layer)

The component composition of the coating layer of the obtained hot-pressed member was measured by area analysis using an SEM (scanning electron microscope) - EDX (energy dispersive X-ray analysis). The SEM-EDX analysis was performed at an acceleration voltage of 15.0 kV using an SEM (JSM-7200F) manufactured by JEOL Ltd. and an EDX detector (UltraDry) manufactured by Thermo Fisher Scientific K.K. The obtained results are shown in Table 2.

(Evaluation of crack length)

Further, the total crack length index $L_{tc}$ of cracks that had occurred in the coating layer and the parallel length $L_w$ were measured using the SEM, and $L_{tc}/L_w$ was calculated. Specifically, a cross-section of the hot-pressed member was observed at 500× magnification using the SEM, and SEM images of ten randomly selected fields of view were obtained. From the obtained SEM images, $L_{tc}/L_w$ was determined for each field of view, and the mean value of $L_{tc}/L_w$ determined for the ten fields of view was determined as the value of $L_{tc}/L_w$ of the member under test. Table 2 shows the obtained results.

(Corrosion resistance at cut portions)

Next, the corrosion resistance at cut portions of each of the obtained hot-pressed members was evaluated through the following procedure.
A phosphate-based conversion coating and an electrodeposition coating were applied to a test specimen taken from each hot-pressed member to prepare a test specimen for corrosion resistance evaluation. Cross scratches (each having an angle of 60°) with a total length of 160 mm (80 mm each) were made at the center of the test specimen for corrosion resistance evaluation, and the test specimen for corrosion resistance evaluation was subjected to a corrosion test (SAE-J2334). The corrosion resistance of the cut portions was evaluated based on the occurrence of red rust after 30 cycles, according to the following criteria. Table 2 shows the evaluation results.

Grade 3: The length of a scratch portion with red rust is less than 2 mm.
Grade 2: The length of a scratch portion with red rust is 2 mm or more but less than 4 mm.
Grade 1: The length of a scratch portion with red rust is 4 mm or more.

Herein, each test specimen for corrosion resistance evaluation was determined to have sufficiently high corrosion resistance at cut portions when its grade was "Grade 2" or higher.

(Diffusible hydrogen content in steel)

To evaluate the hydrogen embrittlement resistance property of the obtained hot-pressed member, which is associated with hydrogen introduced during the hot-pressing process, the diffusible hydrogen content in the steel was measured immediately after pressing.

The diffusible hydrogen content in steel of the obtained hot-pressed member immediately after hot pressing was measured using the following method. A small piece measuring 10 mm × 15 mm was cut from a flat portion of the hot-pressed member. The coating layers on both surfaces were removed by grinding with a precision grinder known as a Leutor. Then, temperature-programmed desorption analysis was performed to determine the cumulative hydrogen content at the point when the temperature reached 200°C, which was defined as the diffusible hydrogen content in the steel. For the temperature-programmed desorption analysis, a temperature-programmed desorption analyzer manufactured by J-Science Co., Ltd. was used, argon was used as a carrier gas, and the heating rate was set to 200°C/s. The obtained diffusible hydrogen content in the steel was evaluated according to the following criteria. Table 2 shows the evaluation results.

Good: Less than 0.20 mass ppm
Poor: 0.20 mass ppm or more

Table 2 demonstrates that each of the hot-pressed members satisfying the conditions of the present invention exhibits excellent corrosion resistance at cut portions and has a low diffusible hydrogen content in steel immediately after hot pressing, thereby exhibiting hydrogen embrittlement resistance.

[Table 2]

| No. | Heat treatment | | Hot-pressed member | | | | | | | | Evaluation results | | Remarks |
| | | | Component composition (mass%) of coating layer | | | | | Evaluation of crack length | | Corrosion resistance at cut portions | Diffusible hydrogen content in steel | |
| | Heating temperature(°C) | Holding time (min) | Al | Mg | Ca | Si | Fe | $L_{tc}/L_w$ | Determination | | | |
|---|---|---|---|---|---|---|---|---|---|---|---|---|
| 1 | 900 | 1.5 | 46.1 | 1.0 | 0 | 10.2 | 42.7 | 0.87 | Good | 3 | Good | Example |
| 2 | 900 | 1.5 | 46.6 | 1.1 | 0 | 10.0 | 42.3 | 0.94 | Good | 2 | Good | Example |
| 3 | 900 | 1.5 | 45.4 | 1.0 | 0 | 9.9 | 43.7 | 1.12 | Poor | 1 | Poor | Comparative Example |
| 4 | 900 | 1.5 | 45.9 | 1.0 | 0 | 10.2 | 42.9 | 0.76 | Good | 3 | Good | Example |
| 5 | 900 | 1.5 | 47.7 | 0.05 | 0 | 10.4 | 41.9 | 0.82 | Good | 2 | Poor | Comparative Example |
| 6 | 900 | 1.5 | 47.5 | 0.1 | 0 | 10.2 | 42.2 | 0.86 | Good | 2 | Good | Example |
| 7 | 900 | 1.5 | 47.5 | 0.5 | 0 | 10.7 | 41.3 | 0.86 | Good | 3 | Good | Example |
| 8 | 900 | 1.5 | 45.0 | 3.2 | 0 | 10.3 | 41.5 | 0.90 | Good | 3 | Good | Example |
| 9 | 900 | 1.5 | 42.4 | 4.8 | 0 | 10.7 | 42.1 | 0.89 | Good | 3 | Good | Example |
| 10 | 900 | 1.5 | 42.1 | 5.5 | 0 | 10.4 | 42.0 | 0.87 | Good | 3 | Poor | Comparative Example |
| 11 | 900 | 1.5 | 48.7 | 0 | 0 | 10.1 | 41.2 | 0.90 | Good | 2 | Poor | Comparative Example |
| 12 | 900 | 1.5 | 48.0 | 0 | 0.01 | 10.2 | 41.8 | 0.87 | Good | 3 | Good | Example |
| 13 | 900 | 1.5 | 48.5 | 0 | 0.1 | 10.1 | 41.3 | 0.82 | Good | 3 | Good | Example |
| 14 | 900 | 1.5 | 48.1 | 0 | 0.8 | 10.1 | 41.0 | 0.86 | Good | 3 | Good | Example |
| 15 | 900 | 1.5 | 47.0 | 0 | 1.2 | 10.0 | 41.8 | 0.84 | Good | 3 | Poor | Comparative Example |
| 16 | 900 | 1.5 | 47.1 | 1.1 | 0.03 | 10.0 | 41.8 | 0.89 | Good | 3 | Good | Example |
| 17 | 900 | 1.5 | 40.6 | 1.2 | 0 | 1.1 | 57.1 | 1.09 | Poor | 1 | Poor | Comparative Example |
| 18 | 900 | 1.5 | 46.1 | 1.0 | 0 | 3.2 | 49.7 | 0.87 | Good | 2 | Good | Example |
| 19 | 900 | 1.5 | 45.8 | 1.0 | 0 | 11.5 | 41.7 | 0.85 | Good | 2 | Good | Example |
| 20 | 900 | 1.5 | 43.8 | 1.1 | 0 | 13.8 | 41.3 | 0.82 | Good | 2 | Good | Example |
| 21 | 900 | 1.5 | 43.7 | 1.0 | 0 | 15.2 | 40.1 | 0.86 | Good | 1 | Good | Comparative Example |
| 22 | 900 | 1.5 | 30.3 | 1.0 | 0 | 13.1 | 55.6 | 1.17 | Poor | 1 | Poor | Comparative Example |

(continued)

| No. | Heat treatment | | Hot-pressed member | | | | | | | | Evaluation results | | Remarks |
| | | | Component composition (mass%) of coating layer | | | | | Evaluation of crack length | | | | | |
| | Heating temperature(°C) | Holding time (min) | Al | Mg | Ca | Si | Fe | $L_{tc}/L_w$ | Determination | Corrosion resistance at cut portions | Diffusible hydrogen content in steel | |
| 23 | 940 | 1.5 | 41.2 | 1.0 | 0 | 10.0 | 47.8 | 0.86 | Good | 3 | Good | Example |
| 24 | 980 | 1.5 | 37.0 | 1.1 | 0 | 10.1 | 51.8 | 0.89 | Good | 2 | Good | Example |
| 25 | 1000 | 1.5 | 33.1 | 1.1 | 0 | 9.9 | 55.9 | 1.33 | Poor | 1 | Poor | Comparative Example |
| 26 | 980 | 3.0 | 40.3 | 1.0 | 0 | 9.8 | 48.9 | 0.91 | Good | 3 | Good | Example |
| 27 | 980 | 5.0 | 36.9 | 0.9 | 0 | 10.3 | 51.9 | 0.84 | Good | 2 | Good | Example |
| 28 | 980 | 7.0 | 32.0 | 1.1 | 0 | 10.7 | 56.2 | 1.05 | Poor | 1 | Poor | Comparative Example |

Reference Signs List

1    hot-pressed member
2    steel sheet
3    coating layer
4    crack
5    steel sheet for hot pressing
7    plating layer
7A   interfacial alloy phase
7B   metal layer
8    crystal grains

**Claims**

1.  A hot-pressed member comprising a steel sheet and a coating layer provided on at least one surface of the steel sheet, **characterized in that**

    the coating layer has a component composition including, in mass%:

    at least one of Mg: 0.1 to 5.0% and Ca: 0.005 to 1.0%,
    Si: 3.0 to 15.0%, and
    Fe: 55.0% or less,
    with the balance being Al and unavoidable impurities, and

    the coating layer satisfies a condition "$L_{tc}/L_w \leq 1$", where $L_{tc}$ is a total crack length index of cracks observed within a range of a length $L_w$ of the coating layer, as measured in a direction parallel to the surface of the steel sheet, in a cross-section of the coating layer taken perpendicular to the surface of the steel sheet.

2.  A steel sheet for hot pressing, comprising a steel sheet and a plating layer provided on at least one surface of the steel sheet, **characterized in that**

    the plating layer includes an interfacial alloy layer provided on the steel sheet, and a metal layer provided on the interfacial alloy layer,
    the metal layer has a component composition including, in mass%:

    at least one of Mg: 0.2 to 7.0% and Ca: 0.01 to 1.5%,
    Si: 1.0 to 10.0%, and
    Fe: 10% or less,
    with the balance being Al and unavoidable impurities, and

    an area ratio of crystal grains that satisfy a condition "$L_c \geq L_h$" in the metal layer is 50% or more in a cross-section of the metal layer taken perpendicular to the surface of the steel sheet, where $L_c$ is a maximum length of each crystal grain in the metal layer as measured in a direction parallel to the surface of the steel sheet, and $L_h$ is a thickness of the metal layer.

[Fig. 1]

[Fig. 2]

[Fig. 3]

# EP 4 764 022 A1

## INTERNATIONAL SEARCH REPORT

| | International application No. |
|---|---|
| | **PCT/JP2024/017906** |

### A. CLASSIFICATION OF SUBJECT MATTER

*C23C 2/12*(2006.01)i; *B21D 22/20*(2006.01)i; *C22C 21/00*(2006.01)i; *C22C 21/02*(2006.01)i; *C22C 21/06*(2006.01)i; *C22C 30/00*(2006.01)i; *C23C 2/28*(2006.01)i; *C23C 2/40*(2006.01)i; *C21D 1/18*(2006.01)n; *C21D 9/00*(2006.01)n; *C22C 38/00*(2006.01)n; *C22C 38/06*(2006.01)n; *C22C 38/60*(2006.01)n

FI:  C23C2/12; B21D22/20 G; B21D22/20 H; C22C21/00 M; C22C21/00 N; C22C21/02; C22C21/06; C22C30/00; C23C2/28; C23C2/40; C21D1/18 C; C21D9/00 A; C22C38/00 301T; C22C38/00 302X; C22C38/06; C22C38/60

According to International Patent Classification (IPC) or to both national classification and IPC

### B. FIELDS SEARCHED

Minimum documentation searched (classification system followed by classification symbols)

C23C2/00-2/40

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | KR 10-2365408 B1 (HYUNDAI STEEL COMPANY) 21 February 2022 (2022-02-21) claims, paragraphs [0091]-[0126], fig. 2-3 | 1-2 |
| Y | | 1-2 |
| Y | JP 2012-7245 A (NIPPON STEEL CORPORATION) 12 January 2012 (2012-01-12) paragraphs [0001], [0096]-[0117], fig. 3 | 1-2 |
| Y | WO 2015/098653 A1 (NIPPON STEEL & SUMITOMO METAL CORPORATION) 02 July 2015 (2015-07-02) claims | 1-2 |
| A | JP 2000-328216 A (NIPPON STEEL CORPORATION) 28 November 2000 (2000-11-28) | 1-2 |
| A | JP 2022-513647 A (POSCO) 09 February 2022 (2022-02-09) | 1-2 |

☐ Further documents are listed in the continuation of Box C.      ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **09 July 2024** | **23 July 2024** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

18

## INTERNATIONAL SEARCH REPORT
### Information on patent family members

International application No.

**PCT/JP2024/017906**

| Patent document cited in search report | Publication date (day/month/year) | Patent family member(s) | Publication date (day/month/year) |
|---|---|---|---|
| KR 10-2365408 B1 | 21 February 2022 | (Family: none) | |
| JP 2012-7245 A | 12 January 2012 | US 6649282 B1 column 1, lines 6-11, column 13, line 43 - column 19, line 26, fig. 3 EP 1184478 A1 AU 3195300 A CA 2367506 A NZ 514381 A TW 507021 B CN 1347464 A AT 468417 T KR 10-2001-0113772 A | |
| WO 2015/098653 A1 | 02 July 2015 | US 2019/0160519 A1 claims EP 3070187 A1 CA 2933039 A1 KR 10-2016-0095078 A CN 105829578 A RU 2016128897 A BR 112016013842 A TW 201529894 A | |
| JP 2000-328216 A | 28 November 2000 | (Family: none) | |
| JP 2022-513647 A | 09 February 2022 | US 2022/0048277 A1 WO 2020/111881 A1 EP 3889312 A1 KR 10-2020-0066239 A CN 113166914 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2017536472 W